# EUROPÄISCHE PATENTSCHRIFT

(11) **EP 2 391 740 B1**
(45) Veröffentlichungstag und Bekanntmachung des Hinweises auf die Patenterteilung: **09.04.2014**
(21) Anmeldenummer: 09801713.0
(22) Anmeldetag: 28.12.2009
(51) Int. Cl.: C22B 11/00

(54) **VERFAHREN ZUR WIEDERGEWINNUNG VON RUTHENIUM AUS GEBRAUCHTEN RUTHENIUMOXIDHALTIGEN KATALYSATOREN**
METHOD FOR RECOVERING RUTHENIUM FROM SPENT CATALYSTS CONTAINING RUTHENIUM OXIDE
PROCÉDÉ DE RÉCUPÉRATION DE RUTHÉNIUM DANS DES CATALYSEURS USAGÉS CONTENANT DE L'OXYDE DE RUTHÉNIUM

(30) Priorität: 30.12.2008 EP 08173096
(43) Veröffentlichungstag der Anmeldung: 07.12.2011
(73) Patentinhaber: BASF SE, 67056 Ludwigshafen (DE)
(72) Erfinder: HENZE, Guido, 68642 Bürstadt (DE); URTEL, Heiko, 67227 Frankenthal (DE); SESING, Martin, 67165 Waldsee (DE); KARCHES, Martin, 67434 Neustadt (DE)
(86) Internationale Anmeldenummer: PCT/EP2009/067939
(87) Internationale Veröffentlichungsnummer: WO 2010/076297

(56) Entgegenhaltungen:
- EP-A1- 0 767 243
- WO-A1-2008/062785
- DE-A1-102005 061 954
- JP-A- 2002 206 122

## Beschreibung

Die Erfindung betrifft ein Verfahren zur Wiedergewinnung von Ruthenium aus gebrauchten Rutheniumoxid-haltigen Katalysatoren.

In dem von Deacon 1868 entwickelten Verfahren der katalytischen Chlorwasserstoff-Oxidation wird Chlorwasserstoff mit Sauerstoff in einer exothermen Gleichgewichts-reaktion zu Chlor oxidiert. EP-A 0 743 277 offenbart ein solches Verfahren der katalytischen Chlorwasserstoff-Oxidation, bei dem ein Ruthenium enthaltender Trägerkatalysator eingesetzt wird. Ruthenium wird dabei in Form von Rutheniumchlorid, Rutheniumoxichloriden, Chlorruthenat-Komplexen, Rutheniumhydroxid, Ruthenium-Amin-Komplexen oder in Form weiterer Ruthenium-Komplexe auf den Träger aufgebracht. Gemäß GB 1,046,313 wird in einem Verfahren der katalytischen Chlorwasserstoff-Oxidation als Katalysator Ruthenium(III)chlorid auf Aluminiumoxid eingesetzt.

Üblicherweise wird als Aluminiumoxidträger γ-Aluminiumoxid eingesetzt.

Gebrauchte Edelmetallkatalysatoren, welche Platingruppen-Metalle auf γ-Aluminiumoxid als Träger enthalten, werden in der Regel durch hydrometallurgische Verfahren behandelt, um die Edelmetalle wiederzugewinnen. Dabei wird der γ-Aluminiumoxid-Träger in Natronlauge oder Schwefelsäure aufgelöst, wobei das Edelmetall als ungelöster Rückstand verbleibt. Diese Art der Rückgewinnung erfordert einen geringen Kohlenstoffgehalt der gebrauchten Katalysatoren. Edelmetallkatalysatoren mit hohem Kohlenstoffgehalt sowie Katalysatoren, welche Edelmetalle auf unlöslichen Trägern wie α-Aluminiumoxid, Siliciumdioxid oder Zeolithen enthalten, werden in pyrometallurgischen Verfahren verarbeitet, um die Edelmetalle zurückzugewinnen. Bei pyrometallurgischen Prozessen wird der Katalysator bei Temperaturen von > 1300 °C in eine Schmelze überführt und nachfolgend in seine elementaren Bestandteile aufgetrennt. Siehe auch Hydrocarbon Engineering July 2003, Seiten 48-53, und Hydrocarbon Engineering March 2004, Seiten 31-36. Die Rückgewinnung von Edelmetallen aus gebrauchten, edelmetallhaltigen Katalysatoren durch pyrometallurgische Prozesse ist aufwändig und teuer.

Nachteilig an den Verfahren der katalytischen Chlorwasserstoff-Oxidation, die mit Katalysatoren auf Basis von γ-Aluminiumoxid arbeiten, ist die geringe mechanische Festigkeit der Katalysatoren. Diese hat einen hohen Abrieb und Feinstaubbildung zur Folge. Daher werden in neuester Zeit in der katalytischen Chlorwasserstoff-Oxidation auch Edelmetallkatalysatoren eingesetzt, welche Ruthenium auf α-Aluminiumoxid als Träger enthalten. Da α-Aluminiumoxid sowohl in Natronlauge als auch in Schwefelsäure unlöslich ist, scheidet die Rückgewinnung des Rutheniums aus den gebrauchten, α-Aluminiumoxid enthaltenden Katalysatoren durch hydrometallurgische Prozesse aus.

JP 03-013531 offenbart ein Verfahren zur Wiedergewinnung von Ruthenium aus Ruthenium oder Rutheniumoxid enthaltenden Rückständen. Dabei werden diese in der Hitze mit gasförmigem Chlor zu Rutheniumchlorid umgesetzt. Das flüchtige Rutheniumchlorid wird anschließend durch eine Bariumchlorid-Lösung geleitet und als wasserlösliches BaRuCl₅ aufgefangen.

JP 58-194745 offenbart ein Verfahren der Wiedergewinnung von Ruthenium, bei dem auf einem korrosionsfesten Träger vorliegende Rutheniumoxide zunächst zu metallischem Ruthenium reduziert und anschließend in lösliche Alkaliruthenate überführt werden.

JP 2002-206122 betrifft ein Verfahren, bei dem Ruthenium aus Ruthenium-haltigen Mischoxiden, welche weitere Metalle enthalten, wiedergewonnen wird. Das Ruthenium-haltige Mischoxid wird reduziert, wobei Ruthenium und die weiteren Metalle reduziert werden. Anschließend werden die weiteren, von Ruthenium verschiedenen Metalle durch Säurebehandlung aufgelöst, wobei Ruthenium als unlöslicher Rückstand verbleibt und durch Filtration gewonnen wird.

In der DE-A 10 2005 061 954 ist ein Verfahren zur Wiedergewinnung von Ruthenium aus einem gebrauchten Ruthenium-haltigen Katalysator, der Rutheniumoxid auf einem Trägermaterial enthält, beschrieben, bei dem in einem ersten Schritt das auf dem Träger vorliegende Rutheniumoxid zu metallischem Ruthenium reduziert wird und anschließend das auf dem Träger vorliegende metallische Ruthenium mit Salzsäure in Gegenwart von einem sauerstoffhaltigen Gas als Ruthenium(III)chlorid herausgelöst wird.

Der Einsatz von Wasserstoff erfordert einen separaten Verfahrensschritt. Zudem muss der desaktivierte Katalysator in einen separaten Reduktionsofen eingebaut werden.

Aufgabe der Erfindung ist es, ein Verfahren zur Wiedergewinnung von Ruthenium aus Ruthenium-haltigen Katalysatoren, welche Ruthenium in oxidischer Form auf in Mineralsäuren schwer löslichen, keramischen Trägermaterialien enthalten, bereitzustellen. Das Verfahren soll einfach durchzuführen und kostengünstig sein.

Gelöst wird die Aufgabe durch ein Verfahren zur Wiedergewinnung von Ruthenium aus einem gebrauchten Ruthenium-haltigen Katalysator, der Ruthenium als Rutheniumoxid auf einem in Mineralsäure schwer löslichen Trägermaterial enthält, mit den Schritten:
a) der Rutheniumoxid enthaltende Katalysator wird in einem Gasstrom enthaltend Chlorwasserstoff und gegebenenfalls ein Inertgas bei einer Temperatur von 300 bis 500 °C reduziert;
b) der reduzierte Katalysator aus Schritt a) wird mit Salzsäure in Gegenwart eines sauerstoffhaltigen Gases behandelt, wobei das auf dem Träger vorliegende metallische Ruthenium als Ruthenium(III)chlorid gelöst und als wässrige Ruthenium(III)chlorid-Lösung gewonnen wird;
c) gegebenenfalls wird die Ruthenium(III)chlorid-Lösung aus Schritt b) weiter aufgearbeitet.

Es wurde gefunden, dass sich RuO₂ mit Chlorwasserstoff reduzieren lässt. Es wird angenommen, dass die Reduktion über RuCl₃ bis zum elementaren Ruthenium erfolgt. Behandelt man also einen rutheniumoxidhaltigen Katalysator mit Chlorwasserstoff, so wird vermutlich nach einer ausreichend langen Behandlungszeit Rutheniumoxid quantitativ zu Ruthenium reduziert.

Es entfällt also der separate Reduktionsschritt mit Wasserstoff. Der gebrauchte Katalysator kann in dem Reaktor, in dem die Chlorwasserstoff-Oxidation durchgeführt wird, reduziert werden. Der Katalysator muss nicht in einen separaten Reduktionsofen eingebaut werden.

Geeignete schwer lösliche Trägermaterialien, welche nach dem erfindungsgemäßen Verfahren behandelt werden können, sind beispielsweise α-Aluminiumoxid, Siliciumdioxid, Titandioxid (Rutil- und Anatas-TiO₂, bevorzugt Rutil-TiO₂), Zirkondioxid, Zeolithe und Graphit. Bevorzugter Träger ist α-Aluminiumoxid.

Vorzugsweise wird das erfindungsgemäße Verfahren zur Wiedergewinnung von Ruthenium aus im Deacon-Verfahren eingesetzten, gebrauchten Ruthenium-haltigen Katalysatoren eingesetzt, welche als Träger α-Aluminiumoxid, gegebenenfalls im Gemisch mit weiteren Trägermaterialien, enthalten. Im Allgemeinen besteht der Träger im Wesentlichen aus α-Aluminiumoxid, kann aber weitere Trägermaterialien, beispielsweise Graphit, Siliciumdioxid, Titandioxid und/oder Zirkondioxid, bevorzugt Titandioxid und/oder Zirkondioxid, enthalten. Im Allgemeinen wird dieser Katalysator in der katalytischen Chlorwasserstoff-Oxidation bei einer Temperatur von oberhalb 200 °C, bevorzugt oberhalb von 350 °C, eingesetzt. Die Reaktionstemperatur beträgt dabei im Allgemeinen nicht mehr als 600 °C, vorzugsweise nicht mehr als 500 °C.

In dem auch als Deacon-Prozess bekannten katalytischen Verfahren wird Chlorwasserstoff mit Sauerstoff in einer exothermen Gleichgewichtsreaktion zu Chlor oxidiert, wobei Wasserdampf anfällt. Üblicherweise wird Sauerstoff in überstöchiometrischen Mengen eingesetzt. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Übliche Reaktionsapparate, in denen die katalytische Chlorwasserstoff-Oxidation durchgeführt wird, sind ein Festbett- oder Wirbelbettreaktor. Die Chlorwasserstoff-Oxidation kann mehrstufig durchgeführt werden.

Die katalytische Chlorwasserstoff-Oxidation kann adiabat oder bevorzugt isotherm oder annähernd isotherm, diskontinuierlich, bevorzugt kontinuierlich, als Fließ- oder Festbettverfahren durchgeführt werden. Bevorzugt wird sie in einem Wirbelschichtreaktor bei einer Temperatur von 320 bis 400 °C und einem Druck von 2 bis 8 bar durchgeführt.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine Ausführungsform besteht darin, dass man in dem Festbettreaktor eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Der Katalysator kann auch als Wirbelbettkatalysator in Form von Pulver mit einer mittleren Teilchengröße von 10 bis 200 Mikrometern eingesetzt werden. Bevorzugt wird der Katalysator als Wirbelbettkatalysator eingesetzt.

Die Rutheniumträgerkatalysatoren können beispielsweise durch Tränkung des Trägermaterials mit wässrigen Lösungen von RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Das Trägermaterial kann nach Tränkung und Dotierung bei Temperaturen von 100 bis 500 °C, bevorzugt 100 bis 400 °C beispielsweise unter einer Stickstoff-, Argon- oder Luftatmosphäre getrocknet und gegebenenfalls calciniert werden. Bevorzugt wird zunächst bei 100 bis 200 °C getrocknet und anschließend bei 200 bis 400 °C calciniert.

Das Volumenverhältnis von Chlorwasserstoff zu Sauerstoff am Reaktoreintritt liegt in der Regel zwischen 1:1 und 20:1, bevorzugt zwischen 2:1 und 8:1, besonders bevorzugt zwischen 2:1 und 5:1.

Die nach dem erfindungsgemäßen Verfahren aufgearbeiteten Ruthenium-haltigen Katalysatoren werden üblicherweise durch Tränkung des Trägermaterials mit wässrigen Lösungen von Rutheniumsalzen erhalten, wobei nach oder bevorzugt vor der Tränkung des Trägermaterials eine Formgebung des Katalysators erfolgt. Die Katalysatoren können auch als Wirbelschichtkatalysatoren in Form von Pulver mit mittleren Teilchengrößen von 10 bis 200 µm eingesetzt werden. Als Festbettkatalysatoren werden sie im Allgemeinen in Form von Katalysatorformkörpern eingesetzt. Üblicherweise werden die Formkörper oder Pulver nach dem Tränken bei Temperaturen von 100 bis 400 °C in Luft-, Stickstoff- oder Argonatmosphäre, bevorzugt Luftatmosphäre getrocknet und anschließend calciniert. Bevorzugt werden die Formkörper oder Pulver zunächst bei 100 bis 150 °C getrocknet und anschließend bei 200 bis 400 °C calciniert. Beim Calcinieren bilden sich aus den Chloriden die Oxide.

Besonders vorteilhaft an dem erfindungsgemäßen Verfahren zur Rückgewinnung von Ruthenium aus Ruthenium-haltigen Trägerkatalysatoren ist die Tatsache, dass Ruthenium in Form einer wässrigen Ruthenium(III)chlorid-Lösung wiedergewonnen werden kann. Diese Ruthenium(III)chlorid-Lösung kann anschließend zur Neuherstellung von Katalysator eingesetzt werden, indem sie auf frisches Trägermaterial aufgebracht wird, gefolgt von Trocknung und gegebenenfalls Calcinieren des imprägnierten Trägers.

Im Allgemeinen beträgt die Ruthenium-Konzentration der Tränklösung 1 bis 10 Gew.-%, bevorzugt 2 bis 6 Gew.-%. Fällt die Ruthenium(III)chlorid-Lösung in Schritt b) des erfindungsgemäßen Verfahrens in niedrigerer Konzentration an, so schließt sich vorzugsweise ein Aufkonzentrierungsschritt an.

In einem ersten Schritt a) wird der Katalysator mit einem Gasstrom enthaltend Chlorwasserstoff und gegebenenfalls ein Inertgas bei einer Temperatur von 300 bis 500 °C, bevorzugt von 330 bis 450 °C, und besonders bevorzugt von 380 bis 430 °C, reduziert. Der Chlorwasserstoff enthaltende Gasstrom kann daneben Inertgase wie Stickstoff oder Argon oder weitere Edelgase enthalten. Im Allgemeinen enthält der Gasstrom mindestens 10 bis 100 Vol.-% Chlorwasserstoff. Die Gasbelastung beträgt im Allgemeinen 0,1 bis 1 kg Gas pro kg Katalysator. Die Behandlungsdauer beträgt beispielsweise 1 bis 36 h.

Die Oxidation von Ruthenium in Schritt b) erfolgt vorzugsweise in konzentrierter Salzsäure mit einem Chlorwasserstoff-Gehalt von 20 bis 37 Gew.-%, beispielsweise ca. 32 Gew.-%. Die Oxidation erfolgt in Gegenwart eines sauerstoffhaltigen Gases, vorzugsweise von Luft. Beispielsweise kann der metallisches Ruthenium enthaltende, schwer lösliche Träger in einem Autoklaven mit konzentrierter Salzsäure vorgelegt werden und in diese Lösung Luft eingeleitet werden. Um das Lösungsvolumen zu begrenzen, kann zusätzlich gasförmiger Chlorwasserstoff eingeleitet werden. Das Auflösen des metallischen Rutheniums erfolgt üblicherweise bei erhöhter Temperatur von im Allgemeinen 60 bis 150 °C, beispielsweise bei ca. 100 °C.

Die erhaltene Ruthenium(III)chlorid enthaltende wässrige Lösung kann gegebenenfalls weitere Metalle in Form ihrer Chloride enthalten. Diese weiteren Metalle können aus dem Reaktormaterial stammen und durch Abrieb in den Katalysator gelangt sein (beispielsweise Nickel aus Nickel-haltigen Stählen) oder in dem Ruthenium-haltigen Katalysator neben Ruthenium als weitere Aktivmetalle enthalten gewesen sein. So kann der Ruthenium-haltige Katalysator beispielsweise weitere Edelmetalle, ausgewählt aus Palladium, Platin, Osmium, Iridium, Kupfer, Silber, Gold oder Rhenium, enthalten. Diese weiteren Metalle können in einem optionalen Aufarbeitungsschritt c) nach üblichen Methoden teilweise oder vollständig abgetrennt werden. Geeignete Verfahren sind in Beck, Edelmetall-Taschenbuch, 2. Auflage, Heidelberg: Hüthig 1995, sowie Winnacker-Küchler, Chemische Technologie, 4. Auflage, Band 4, Seiten 540 bis 572 beschrieben.

In einer Ausführungsform der Erfindung enthält der Ruthenium-haltige Katalysator als weiteres Metall Nickel. Dann wird in Schritt b) eine Lösung erhalten, die neben Ruthenium(III)chlorid noch Nickel in gelöster Form enthält. Diese Lösung wird anschließend, gegebenenfalls nach Aufkonzentrierung, zur Neuherstellung des Rutheniumträgerkatalysators eingesetzt.

Ein gebrauchter, desaktivierter Deacon-Wirbelschichtkatalysator kann beispielsweise bis zu 2,5 Gew.-% Nickel als Nickelchlorid enthalten. Reduziert man also den Katalysator in situ im Reaktor mit gasförmigem HCl, so enthält auch der reduzierte Katalysator noch 2,5 Gew.-% Nickelchlorid. Eine Aufarbeitung dieses Katalysators ohne vorheriges Abwaschen des Nickelchlorids mit Wasser ergibt dann eine wässrige ruthenium- und nickelhaltige Lösung. Diese Lösung kann ohne vorherige Aufarbeitung zur Präparation eines frischen Katalysators verwendet werden, wobei Nickel als Dotierung die Aktivität des Katalysators noch verbessert.

Die Erfindung wird durch die nachstehenden Beispiele näher erläutert.

### Beispiele

### Beispiel 1

585 g eines gebrauchten und desaktivierten Wirbelschichtkatalysators (2 % RuO₂ auf *α*-Al₂O₃, d = 50 µm) werden in einem Wirbelbettreaktor mit einem Durchmesser von 44 mm, einer Höhe von 990 mm und einer Betthöhe von 300 bis 350 mm für 70 h mit 100 NL/h gasförmiger HCl bei 430 °C behandelt. Der so erhaltene reduzierte Katalysator wird in einem 2500 mL Glasreaktor mit 2000 mL einer 20 %-igen HCl-Lösung unter intensivem Rühren für 96 h bei 100 °C behandelt. Während der Behandlungsdauer werden 20 NL/h Luft eingeperlt. Die überstehende Ru-haltige Lösung wird durch Filtration vom Feststoff (Träger) getrennt und der Filterkuchen mit 500 mL Wasser gewaschen. Die kombinierten wässrigen Phasen enthalten >98 % des Rutheniums. Die wässrige Lösung kann anschließend weiter aufgearbeitet werden.

### Beispiel 2

585 g eines gebrauchten und desaktivierten Wirbelschichtkatalysators, der 2 Gew.-% RuO₂ auf alpha-Al₂O₃, (mittlerer Durchmesser (d₅₀-Wert): 50 µm) und, als Folge von Korrosion und Erosion des nickelhaltigen Reaktors, 2,5 Gew.-% Nickelchlorid enthält, wird in dem in Beispiel 1 beschriebenen Wirbelbettreaktor 70 h lang mit 100 NL/h gasförmiger HCl bei 430 °C behandelt. Der so erhaltene reduzierte Katalysator wird in einem 2500 mL Glasreaktor mit 2000 mL einer 20 %-igen HCl-Lösung unter intensivem Rühren für 96 h bei 100 °C behandelt. Während der gesamten Behandlungsdauer werden 20 NL/h Luft eingeperlt. Die überstehende Ru- und Ni-haltige Lösung wird durch Filtration vom Feststoff (Träger) getrennt und der Filterkuchen mit 500 mL Wasser gewaschen. Die kombinierten wässrigen Phasen enthalten >98 % des Rutheniums und des Nickels. Durch Eindampfen eines Teils dieser Lösung auf 18 mL erhält man eine Lösung, welche 4,2 Gew.% Ruthenium und 7,0 Gew.-% Nickel enthält. Diese wird in einem rotierenden Glaskolben auf 50 g *α*-Al₂O₃ (Pulver, mittlerer Durchmesser. (d₅₀-Wert): 50 µm) aufgesprüht und anschließend der feuchte Feststoff bei 120 °C für 16 h getrocknet. Der getrocknete Feststoff wird anschließend unter Luft für 2 h bei 380 °C calciniert.

2 g dieses Katalysators werden mit 118 g *α*-Al₂O₃ gemischt und in einem Wirbelschichtreaktor (d = 29 mm; Höhe des Wirbelbettes 20 bis 25 cm) bei 360 °C mit 9,0 NL/h HCl und 4,5 NL/h O₂ von unten über eine Glasfritte durchströmt und der HCl-Umsatz durch Einleiten des resultierenden Gasstromes in eine Kaliumiodidlösung und anschließende Titration des entstandenen Iods mit einer Natriumthiosulfatlösung bestimmt. Es wird ein HCl-Umsatz von 40,0 % festgestellt. Ein vergleichbarer Katalysator, analog präpariert aus einer frischen Rutheniumchloridlösung, welche frei von Nickel ist, ergibt einen Umsatz von 37,7 %.

## Patentansprüche

1. Verfahren zur Wiedergewinnung von Ruthenium aus einem gebrauchten Ruthenium-haltigen Katalysator, der Ruthenium als Rutheniumoxid auf einem in Mineralsäure schwer löslichen Trägermaterial enthält, mit den Schritten:
a) der Rutheniumoxid enthaltende Katalysator wird in einem Gasstrom enthaltend Chlorwasserstoff und gegebenenfalls einem Inertgas bei einer Temperatur von 300 bis 500 °C reduziert;
b) der reduzierte Katalysator aus Schritt a) wird mit Salzsäure in Gegenwart eines sauerstoffhaltigen Gases behandelt, wobei das auf dem Träger vorliegende metallische Ruthenium als Ruthenium(III)chlorid gelöst und als wässrige Ruthenium(III)chlorid-Lösung gewonnen wird;
c) gegebenenfalls wird die Ruthenium(III)chlorid-Lösung aus Schritt b) weiter aufgearbeitet.

2. Verfahren nach Anspruch 1, **dadurch gekennzeichnet, dass** das schwer lösliche Trägermaterial α-Aluminiumoxid enthält.

3. Verfahren nach Anspruch 1 oder 2, **dadurch gekennzeichnet, dass** der Rutheniumhaltige Katalysator hergestellt wird durch Imprägnieren des schwer löslichen Trägers mit Ruthenium(III)chlorid-Lösung, Trocknen und Calcinieren.

4. Verfahren nach Anspruch 3, **dadurch gekennzeichnet, dass** die in Schritt b) oder c) erhaltene Ruthenium(III)chlorid-Lösung zur Herstellung von neuem Katalysator eingesetzt wird.

5. Verfahren nach einem der Ansprüche 1 bis 4, **dadurch gekennzeichnet, dass** der gebrauchte Ruthenium-haltige Katalysator zusätzlich Nickel enthält.

6. Verfahren nach Anspruch 5, **dadurch gekennzeichnet, dass** die in Schritt b) erhaltene wässrige Ruthenium(III)chlorid-Lösung Nickel in gelöster Form enthält, und diese Lösung, gegebenenfalls nach Aufkonzentrierung, zur Herstellung von neuem Katalysator eingesetzt wird.

7. Verfahren nach einem der Ansprüche 1 bis 6, **dadurch gekennzeichnet, dass** der Ruthenium-haltige Katalysator in der Chlorwasserstoff-Oxidation eingesetzt wird.

## Claims

1. A process for recovering ruthenium from a used ruthenium-comprising catalyst which comprises ruthenium as ruthenium oxide on a support material which is not readily soluble in mineral acid, which comprises the steps:
a) the ruthenium oxide-comprising catalyst is reduced in a gas stream comprising hydrogen chloride and optionally an inert gas at a temperature of from 300 to 500°C;
b) the reduced catalyst from step a) is treated with hydrochloric acid in the presence of an oxygen-comprising gas, with the metallic ruthenium present on the support being dissolved as ruthenium(III) chloride and obtained as an aqueous ruthenium(III) chloride solution;
c) the ruthenium(III) chloride solution from step b) is optionally worked up further.

2. The process according to claim 1, wherein the sparingly soluble support material comprises α-aluminum oxide.

3. The process according to claim 1 or 2, wherein the ruthenium-comprising catalyst is produced by impregnation of the sparingly soluble support with ruthenium(III) chloride solution, drying and calcination.

4. The process according to claim 3, wherein the ruthenium(III) chloride solution obtained in step b) or c) is used for producing fresh catalyst.

5. The process according to any of claims 1 to 4, wherein the used ruthenium-comprising catalyst additionally comprises nickel.

6. The process according to claim 5, wherein the aqueous ruthenium(III) chloride solution obtained in step b) comprises nickel in dissolved form and this solution is, optionally after concentration, used for producing fresh catalyst.

7. The process according to any of claims 1 to 6, wherein the ruthenium-comprising catalyst is used in the oxidation of hydrogen chloride.

## Revendications

1. Procédé pour la récupération de ruthénium d'un catalyseur usagé contenant du ruthénium, qui contient le ruthénium sous forme d'oxyde de ruthénium sur un matériau support peu soluble dans un acide minéral, présentant les étampes :
a) le catalyseur contenant l'oxyde de ruthénium est réduit dans un flux gazeux contenant du chlorure d'hydrogène et le cas échéant un gaz inerte à une température de 300 à 500°C ;
b) le catalyseur réduit de l'étape a) est traité avec de l'acide chlorhydrique en présence d'un gaz contenant de l'oxygène, le ruthénium métallique se trouvant sur le support étant dissous sous forme de chlorure de ruthénium (III) et obtenu sous forme de solution aqueuse de chlorure de ruthénium (III) ;
c) le cas échéant la solution de chlorure de ruthénium (III) de l'étape b) est traitée davantage.

2. Procédé selon la revendication 1, **caractérisé en ce que** le matériau support peu soluble contient de l'a-oxyde d'aluminium.

3. Procédé selon la revendication 1 ou 2, **caractérisé en ce que** le catalyseur contenant du ruthénium est préparé par imprégnation du support peu soluble avec une solution de chlorure de ruthénium (III), séchage et calcination.

4. Procédé selon la revendication 3, **caractérisé en ce que** la solution de chlorure de ruthénium (III) obtenue dans l'étape b) ou c) est utilisée pour la préparation de nouveau catalyseur.

5. Procédé selon l'une quelconque des revendications 1 à 4, **caractérisé en ce que** le catalyseur usagé contenant du ruthénium contient en outre du nickel.

6. Procédé selon la revendication 5, **caractérisé en ce que** la solution aqueuse de chlorure de ruthénium (III) obtenue dans l'étape b) contient du nickel sous forme dissoute et cette solution est utilisée, le cas échéant après concentration, pour la préparation de nouveau catalyseur.

7. Procédé selon l'une quelconque des revendications 1 à 6, **caractérisé en ce que** le catalyseur contenant du ruthénium est utilisé dans l'oxydation de chlorure d'hydrogène.
